Europäisches Patentamt

European Patent Office

Office européen des brevets

(19)

(11) Veröffentlichungsnummer: **0 141 065**
**B1**

# (12) EUROPÄISCHE PATENTSCHRIFT

(45) Veröffentlichungstag der Patentschrift:
16.12.87

(21) Anmeldenummer: 84109156.4

(22) Anmeldetag: 02.08.84

(51) Int. Cl.⁴: **F 16 B 11/00**

(54) Verfahren zum Verkleben von Blechen, Vorrichtung zur Durchführung des Verfahrens und Verwendung duroplastischer Kunstharze zum Verkleben von Blechen.

(30) Priorität: 30.08.83 DE 3331199

(43) Veröffentlichungstag der Anmeldung:
15.05.85 Patentblatt 85/20

(45) Bekanntmachung des Hinweises auf die Patenterteilung:
16.12.87 Patentblatt 87/51

(84) Benannte Vertragsstaaten:
AT DE FR GB IT SE

(56) Entgegenhaltungen:
DE-A-2 841 449
FR-A-2 211 807

(73) Patentinhaber: ROBERT BOSCH GMBH, Postfach 50, D-7000 Stuttgart 1 (DE)

(72) Erfinder: Esper, Friedrich, Dr., Römerstrasse 196, D-7250 Leonberg (DE)
Erfinder: Gohl, Walter, Dr., Kniebisstrasse 26, D-7031 Aidlingen (DE)
Erfinder: Müller, Hans- Georg, Dr. Dipl.- Ing., Lerchenweg 7, D-7251 Weissach (DE)
Erfinder: Scharf, Friedrich, Dr. Dipl.- Phys., Amundsenstrasse 32, D-7000 Stuttgart 40 (DE)

EP 0 141 065 B1

## Beschreibung

Die Erfindung geht aus von einem Verfahren nach der Gettung des Hauptanspruchs. Zur Verbindung von Metallblechen unterscheidet man vor allem zwei Gruppen von Verfahren, nämlich zum einen die Schweißverfahren und zum anderen. Verfahren, die auf der Klebetechnik-beruhen. Die Anwendung der Schweißtechnik, beispielsweise bei Karosseriereparaturen, hat dabei gewisse grundsätzliche Nachteile, da zum einen die Verbindungen zwischen Karosserie und Neuteil nicht spannungsfrei sind und aufwendige Nacharbeiten bei großflächigen Teilen notwendig sind. Zum anderen sind die Verbindungen korrosionsanfällig und nur bedingt wasserdicht; schließlich ist es notwendig, feuer- und hitzegefährdete Teile vor dem Schweißvorgang aus- und hernach wieder einzubauen. Es ist daher nicht überraschend, daß man auf dem Gebiet der Karosserie-Reparaturen bereits versucht, mit der Klebetechnik zum Ziel zu kommen, da die drei bei der Schweißtechnik genannten negativen Punkte bei der Klebetechnik grundsätzlich nicht auftreten. So ist es bekannt, derartige Verklebungen von Blechen mit den seit Jahren bekannten Zweikomponenten-Klebern durchzuführen. Dies ist zwar grundsätzlich möglich, hat aber den entscheidenden Nachteil, daß hier sehr lange Aushärtzeiten, z. T. von mehr als 60 Minuten, notwendig sind, um eine ausreichende Festigkeit des Klebers zu erreichen, die eine Weiterverarbeitung der verklebten Teile gestattet. Eine weitere Forderung an ein wirtschaftlich durchzuführendes Klebeverfahren ist daher, daß die Aushärtzeiten bei maximal etwa 2 Minuten liegen, in welcher Zeit die Verklebung eine solche Zugscherfestigkeit erreicht, daß die verklebten Teile gehandhabt und weiterverarbeitet werden können. Eine Nachreaktion zur Erlangung der Endfestigkeit ist selbstverständlich möglich.

Zum Verkleben von Spanplatten ist es bekannt, mit einem Schmelzkleber beschichtete Aluminiumfolien zu verwenden, wobei das Aufschmelzen des Schmelzklebers dadurch erfolgt, daß an das Aluminiumband eine elektrische Spannung gelegt wird, so daß sich das Aluminiunband erwärmt und der Schmelzkleber sich verflüssigt. Derartige mit Kleber beschichtete Metallfolien eignen sich jedoch nicht für die Verklebung von Karosserieteilen, da bei der Verlegung der Folien entlang räumlich gekrümmter Blechkanten durch elektrische Nebenschlüsse erhebliche Probleme auftreten können. Außerdem ist ein Schmelzkleber für die Verklebung von Karosserieblechen ungeeignet, da solche Bleche mit ihrer guten Wärmeleitfähigkeit ohne weiteres beim Gebrauch Temperaturen erreichen können, bei denen der Schmelzkleber an Zugscherfestigkeit verliert. Aus der FR-A-2 211 607 ist ein Verfahren zum Verkleben gleicher oder verschiedener Materialien bekannt, bei dem eine dünne, vorzugsweise aus speziellen Legierungen hergestellte Metallschicht in einer Dicke von 10 bis 100 µm mit einen thermoplastischen oder duroplastischen Kleber beschichtet wird, woraufhin diese beschichtete Metallfolie ganzflächig zwischen die zu verklebenden Teile gelegt wird und der Kleber sodann entweder durch ein Hochfrequenzfeld oder durch Anlegen eines Stromes an die Metallschicht soweit erwärmt wird, daß die Teile miteinander verkleben. Bezüglich der Metallfolien gilt hier natürlich die gleiche Betrachtung, wie sie oben bereits angegeben wurde. Bezüglich des duroplastischen Klebers ist darüber hinaus lediglich erwähnt, daß er aushärtet durch Erwärmen auf eine Temperatur, die ausreicht, die Polymerisation auszulösen. Man muß daher davon ausgehen, daß es sich hier um selbsthärtende duroplastische Massen handelt.

Schließlich ist es auch noch bekannt, Scheiben in Kraftfahrzeugen mit Hilfe eines selbstausvulkanisierenden Kunstkautschukprofils mit eingebauten Heizdraht einzukleben. Durch Anlagen einer Spannung an den Heizdraht wird der Kunstkautschuk soweit erweicht, daß sich die Scheibe andrücken läßt und dann dicht mit dem Rahmen verklebt ist. Kunstkautschuk ist jedoch aus den gleichen Gründen, wie sie oben für den Schmelzkleber genannt wurden, für das Verkleben von Karosserieblechen ungeeignet.

## Vorteile der Erfindung

Das erfindungsgemäße Verfahren mit den kennzeichnenden Merkmalen des Hauptanspruchs hat demgegenüber den Vorteil, daß sich Aushärtzeiten von weniger als einer Minute ergeben, so daß die verklebten Bleche unmittelbar weiter bearbeitet werden können. Durch die Tatsache, daß ein duroplastisches Kunstharz als Kleber verwendet wird, läßt die Zugscherfestigkeit der Verklebung bei einer möglichen Erhöhung der Temperatur nicht wesentlich nach, so daß Verklebungen in Bereichen möglich sind, in denen höhere Temperaturen zu erwarten sind. Das Verfahren ist sehr einfach zu handhaben, vor allem dann, wenn für die Durchführung der Verklebung die dazu beanspruchte Vorrichtung verwenden wird. Statt spezieller Schweißtransformatoren lassen sich hier zum Vorheizen und zur Erreichung und Konstanthaltung der Solltemperatur handelsübliche Batterieladegeräte verwenden, mit denen es ohne weiteres möglich ist, die Drahttemperatur konstantzuhalten. Die Vorteile, die sich gegenüber den Schweißverfahren ergeben, wurden oben bereits erwähnt.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, wenn der Kleber mit dem integrierten Heizdraht einen kreisförmigen Querschnitt aufweist und wenn vor dem Verkleben in eines der zu verklebenden Bleche parallel zur Kant, mindestens eine Rille zur Aufnahme des Klebers eingedrückt wird. Zur Fixierung des Klebers ist es vorteilhaft, diesen auf eine solche Temperatur vorzuheizen, daß seine Oberfläche klebrig wird. Vorteilhaft ist ferner die Verwendung einer Vorrichtung, die drehbar gelagerte Rollen aufweist auf die der Kleber mit dem integrierten Heizdraht aufgewickelt ist, wobei Stromzuführungen zu den Rollen dafür sorgen, daß dem Heizdraht des Klebers ein elektrischer Strom zugeführt werden kann. Schließlich ist es vorteilhaft, bei der Auswahl des Klebers darauf zu achten, daß die Eigenschaften des Klebers dem folgendem Anforderungsprofil möglichst nahekommen: Seine Konzistenz muß bei Raumtemperatur so sein, daß er zu einer ausreichend formbeständigen Schnur oder Folie geformt werden kann, die auf Rollen mit ca. 20 cm Durchmesser aufrollbar ist. Nach Aufheizen auf ca. 60 - 80° C muß die Oberfläche des Kleber, im Falle der Anwendung in Schnurform klebrig werden. Die Aushärtung soll als Polymerisation bzw. Polyaddition bei Temperaturen über 130° C in Zeiten von 0,5 - 2 Minuten erfolgen. Bei der Reaktion muß sich der Kleber so stark erwärmen, daß er eine für die Benetzung der zu verklebenden Bleche ausreichend dünnflüssige Phase durchläuft. Die Härtungsreaktion muß nach ca. 2 Minuten im wesentlichen abgelaufen sein, wobei allerdings eine Nachhärtung im Verlauf von 12 Stunden bei Raumtemperatur durchaus möglich ist. Das Harz/Härter-System des Klebers muß vor der Verarbeitung bei Raumtemperatur ausreichend stabil sein.

## Zeichnung

Ein Ausführungsbeispiel der Erfindung ist in der Zeichnung dargestellt und in der nachfolgenden Beschreibung näher erläutert. Es zeigen
Figur 1 einen Schnitt durch eine Klebestelle und
Figur 2 Schnitte durch eine Vorrichtung zur Durchführung des Verfahrens.

## Beschreibung des Ausführungsbeispiels

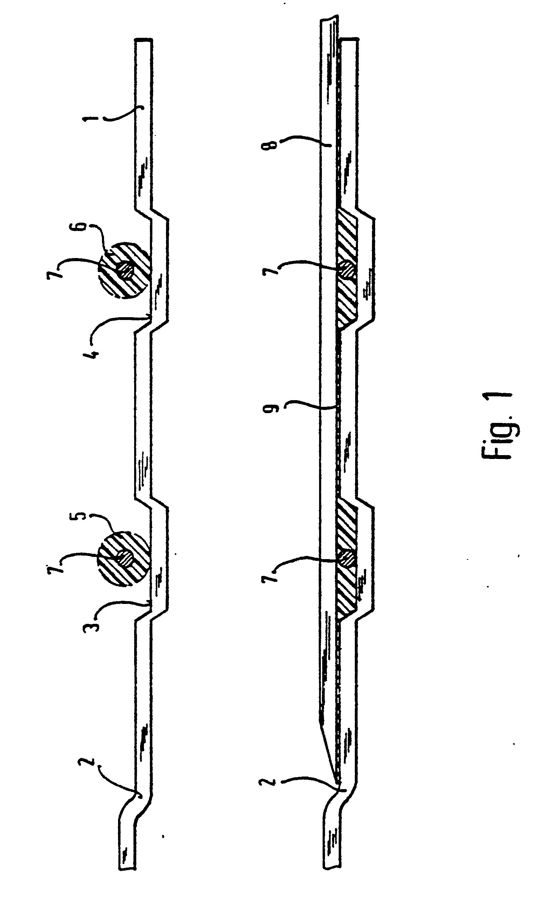

Im oberen Teil der Figur 1 ist nur das Grundblech 1 gezeigt, das beispielsweise eine Dicke von 0,4 mm aufweist. Zunächst wird das Karosserieblech im Abstand von etwa 20 mm von der Kante an der Stelle 2 mittels einer Absetzzange abgesetzt, damit nach Einsetzen des Neublechs eine glatte Oberfläche in Reparaturbereich, um den es sich hier beispielhaft handelt, möglich ist. Sodann werden in die abgesetzte Kante zwei Rillen 3 und 4 eingedrückt, die eine Breite von beispielsweise 3 mm aufweisen und deren Tiefe dem Durchmesser des in dem Kleber integrierten Heizdrahtes entspricht, beispielsweise 0,4 mm. In den Rillen 3 und 4 werden die Klebeschnüre 5 und 6 mit dem integrierten Heizdraht 7 eingelegt, wobei zuvor dafür gesorgt wird, daß durch ein geringes Aufheizen der Schnur die Oberfläche derselben klebrig wird. Das bevorzugt zur Verlegung der Schnüre benutzte Gerät wird weiter unten beschrieben. Der Durchmesser der Klebeschnur liegt beispielsweise bei ca. 1,3 mm. Die Klebeschnur besteht beispielsweise aus einem Zweikomponenten-Polyurethan-System aus einem Isocyanatharz mit einem verzweigten Polyester oder Polyäther als Härter. Nach Einlegen der Klebstoffschnüre 5 und 6 wird das Neublech 8 wie im unteren Teil der Figur 1 gezeigt aufgelegt und durch den Heizdraht 7 ein Strom geschickt, derart, daß der Kleber eine Temperatur erreicht, bei der die Aushärtreaktion beginnt und der Kleber sich durch exotherme Reaktion so stark erwärmt, daß er eine dünnflüssige Phase durchläuft, so daß er sich flächenhaft zwischen die Bleche 1 und 8 verteilen und die Flächen benetzen kann. Die Rillen 3 und 4 sind dann mit dem Kleber ausgefüllt, der Draht 7 verbleibt in der Rille und zwischen den Blechen 1 und 8 bildet sich eine Klebschicht aus, deren Dicke bei etwa 0,015 mm liegt. Die Solltemperatur, die für das Anspringen der exothermen Aushärtreaktion notwendig ist, liegt bei etwa 130° C, muß jedoch für jedes eingesetzte Harz gesondert bestimmt und sollte dann auch möglichst genau eingehalten werden. Im Prinzip kann diese Temperatur des Klebstoffdrahtes durch Anlegen eines Temperaturfühlers an den Draht selbst gemessen werden. Nachteilig ist jedoch, daß man den Fühler an den klebstoffbeschichteten Draht anlegen muß, der Fühler während des Betriebs mit Klebstoff überzogen wird und nach jeder Klebung gereinigt werden muß. Es ist daher vorteilhafter, den der Temperatur proportionalen Widerstand des Drahtes zu messen und hieraus die Temperatur zu ermitteln. Zu diesem Zweck wird als Stromversorgungsgerät ein handelsübliches Batterieladegerät mit Strombegrenzerschaltung verwendet. Unter Ausnützung der in derartigen Geräten integrierten Strom- und Meßeinrichtung kann der Widerstand des Drahtes gemessen werden. Der Widerstand des Drahtes ergibt sich zu

$$R = R_0 \left[ 1 + \alpha(t - t_{Raum}) \right] \quad (1)$$

mit

$$R_0 = \sigma \frac{L_0}{F_0} \quad (2)$$

$\sigma$ = spezif. Widerstand
$L_0$ = Länge des Drahtes bei $t_{Raum}$
$F_0$ = Querschnitt des Drahtes bei $t_{Raum}$
$t_{Raum}$ = Raumtemperatur

$\alpha$ = mittlerer Temperaturkoeffizient

Es wird vorausgesetzt, daß der Benutzer die Länge $L_0$ des Drahtes mißt. Damit ist nach (2) auch $R_0$ bekannt, und es lassen sich zu den Vorwärm- und Aushärttemperaturen die entsprechenden Widerstandsollwerte angeben:

$$R_{soll} = \sigma \frac{L_0}{F_0} [1 + (t_{soll} - t_{Raum})] \quad (3).$$

Da nun andererseits

$$R = \frac{U_{Draht}}{I_{Draht}} = \frac{U_{Draht}}{U_{R_1}} \cdot R_1$$

gilt, wobei $U_{Draht}$ und $U_{R_1}$ im Regler des Ladegeräts ermittelt werden und $R_1$ ein bekannter Widerstand ist, kann in Abhängigkeit von dem durch R vorgegebenen Spannungsverhältnis $U_{Draht}/U_{R_1}$ der strom zu- und abgeschaltet werden und somit der Draht auf einer konstanten Temperatur gehalten werden.

Während im vorhergehenden die Einstellung der Solltemperatur über eine Widerstandsregelung erfolgt, kann diese auch mittels einer Stromzeitsteuerung eingestellt werden. Die mit Strombegrenzerschaltung ausgerüsteten Batterieladegeräte ermöglichen die Einstellung konstanter Stromstärken. Mithin lassen sich für jede Länge $L_0$ konstante Ein/Ausschaltintervalle angeben, die den Draht auf eine vorgegebene Solltemperatur aufheizen. Es wird nun angenommen, daß die Zuordnung der Einschaltdauer $T_{ein}$ ($L_0$) und Ausschaltdauer $T_{aus}$ ($L_0$) zu der Länge $L_0$ bekannt ist bzw. zuvor experimentell ermittelt worden ist. Damit kann die gemessene Länge $L_0$ in entsprechende $T_{ein}$ ($L_0$) und $T_{aus}$ ($T_0$) umgesetzt werden. Der Konstantstrom des Ladegerätes wird dementsprechend zu- und abgeschaltet und somit die Drahttemperatur eingestellt.

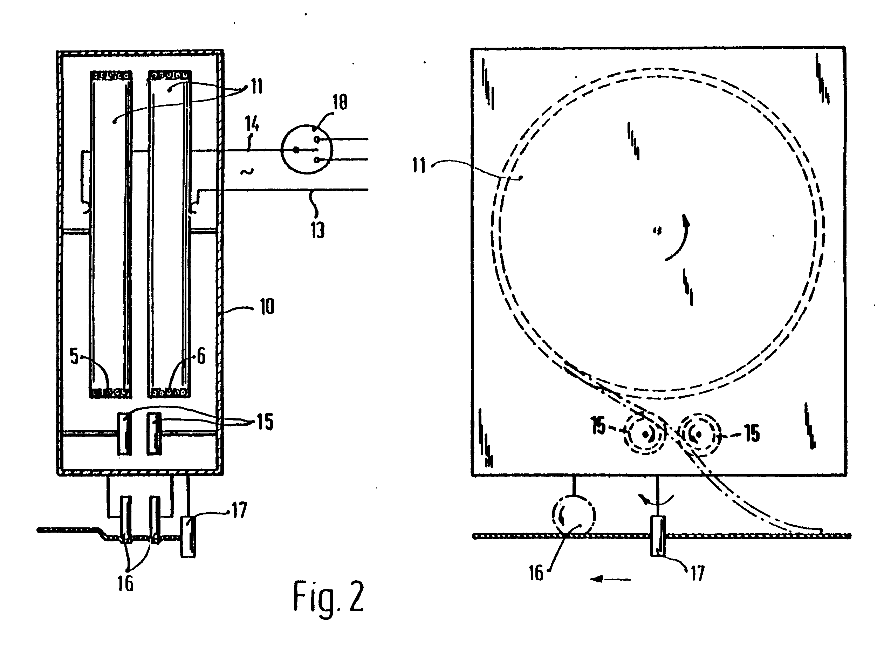

Für die oben beschriebene Verlegung der Klebschnüre 5 und 6 mit dem integrierten Heizdraht 7 ist die Verwendung der Vorrichtung besonders vorteilhaft, wie sie in Figur 2 dargestellt ist. Die Vorrichtung besteht aus einem Gehäuse 10, in dem zwei einzeln gelagerte Rollen 11 zum Aufwickeln der Drahtschnüre 5 und 6 untergebracht sind. Stromzuführungen 13 und 14 ermöglichen eine Kontaktierung der Enden der Heizdrähte 7 der aufgewickelten Schnüre 5 und 6, beispielsweise über Schleifkontakte. Die Schnüre 5 und 6 laufen zwischen Paaren von Führungsrollen 15 hindurch. Unterhalb des Gehäuses sind Gleitrollen 16 vorgesehen, die in den Rillen 3 bzw. 4 entlang laufen. Zusätzlich kann noch eine Führungsrolle 17 vorgesehen sein, die an der Blechkante entlang geführt wird. Die Stromversorgung erfolgt über einen Schalter 18 mit den Schaltstellungen "Aus", "Vorwärmung" und "Solltemperatur". Zur Verlegung der Klebschnüre 5 und 6 in den Rillen 3 und 4 werden die Schnüre auf die für die Blechkante erforderliche Länge zugeschnitten und an den Enden abisoliert. Die Enden werden in entsprechende Vorrichtungen der beiden Rollen angeklemmt, um Kontakt zu den Stromzuführungen 13 und 14 zu erhalten, und die Schnüre dann aufgerollt. Die beiden freien, ebenfalls abisolierten Enden werden miteinander verbunden, damit ein geschlossener Stromkreis gebildet wird. Vor dem Verlegen wird durch Einschalten der Schaltstufe "Vorwärmung" die Klebschnüre 5 und 6 so weit vorgewärmt, daß sie auf dem Blech haften bleiben. Diese vorgewähnten Schnüre werden in den vorgeprägten Rillen 3 und 4 verlegt und durch Andrücken fixiert. Nach Beendigung des Verlegungsvorgangs wird das Blech 8 aufgelegt und dann werden durch Umschalten auf die Schaltstufe "Solltemperatur" die Schnüre auf eine Temperatur aufgeheizt, bei der die exotherme Reaktion des Klebers einsetzt. Dabei kommt eine der oben beschriebenen Möglichkeiten zur Einstellung und Konstanthaltung der Solltemperatur zur Anwendung.

Die beschriebene Vorrichtung kann auch für den Fall Verwendung finden, in welchem der Kleber bandförmig ausgebildet und kombiniert ist mit einer selbsthaftenden Folie. In diesem Falle ist es natürlich nicht notwendig, den Kleber vorzuwärmen, da die selbsthaftende Folie die Aufgabe der Fixierung des Klebers übernimmt. Auch sind die Rillen nich unbedingt erforderlich, da der seitliche Abstand der Drähte in diesem Fall konstant ist, wenn man je ein Kleberband auf jeder Seite der selbsthaftenden Folie versteht. Im Bereich von Ecken wird in diesem Fall die Folie aufgeschnitten, damit die Drähte leicht in diesem Bereich verlegt werden können.

**Patentansprüche**

1. Verfahren zum Verkleben von Blechen mittels eines durch einen integrierten metallischen Leiter aufgeheizten duroplastischen Klebers, dadurch gekennzeichnet, daß als Kleber ein Harz/Härter-Gemisch auf der Basis eines Zweikomponenten-Polyurethan-System oder eines Zweikomponenten-Polyacrylat-Systems eingesetzt wird, das ein duroplastisches Kunstharz ergibt, und daß der Kleber mittels des integrierten Heizdrahtes auf eine solche Temperatur erhitzt wird, daß eine exotherme Reaktion gestartet wird, die, zusammen mit der elektrischen Heimung, den Kleber so stark erwämt, daß er eine vorübergehende dünnflüssige Phase durchläuft, bevor er aushärtet.

2. Verfahren nach Anspruch 1, dadurch gekennzeichnet, daß der Kleber (5, 6) mit dem integrierten Heizdraht (7) einen kreisförmigen Querschnitt aufweist und daß vor dem Verkleben in eines der zu verklebenden Bleche (1) parallel zu der Kante mindestens eine Rille (3, 4) zur Aufnahme des Klebers (5, 6) eingedrückt wird (werden).

3. Verfahren nach Anspruch 2, dadurch gekennzeichnet, daß der Kleber (5, 6) vor dem Verlegen in der (den) Rille(n) (3, 4) auf eine solche Temperatur vorgeheizt wird, daß seine Oberfläche klebrig wird und daß der Kleber (5, 6) in der (den) Rille(n) (3, 4) durch Andrücken fixiert wird.

4. Verfahren nach Anspruch 1, dadurch gekennzeichnet, daß der Kleber bandförmig ausgebildet wird und daß er kombiniert wird mit einer selbsthaftenden Folie und Kleber und selbsthaftende Folie auf den glatten Blechkante fixiert werden.

5. Verfahren nach einem der vorhergehenden Ansprüche, dadurch gekennzeichnet, daß zum Aufheizen des Klebers (5, 6) auf die Solltemperatur mittels des integrierten Heizdrahtes (7) und zum Konstanthalten dieser Temperatur ein handelsübliches Batterieladegerät mit einer Strombegrenzerschaltung verwendet wird.

6. Verfahren nach Anspruch 5, dadurch gekennzeichnet, daß zur Konstanthaltung der Solltemperatur des Heizdrahtes (7) mittels der in dem Batterieladegerät integrierten Strom- und Spannungsmeßeinrichtung der elektrische Widerstand des Drahtes (7) gemessen und mit Hilfe der bekannten Länge des Drahtes der der Solltemperatur entsprechende Widerstandssollwert errechnet wird, der an dem Batterieladegerät eingestellt und der Strom zu dem Heizdraht so zu- und abgeschaltet wird, daß der Sollwiderstand eingehalten und somit die Solltemperatur des Heizdrahtes konstant gehalten wird (Widerstandsregelung).

7. Verfahren nach Anspruch 5, dadurch gekennzeichnet, daß über eine konstante Stromstärke und die zuvor für verschiedene Heizdrahtlängen ermittelten, für die Erreichung und Einhaltung der Solltemperatur erforderlichen Ein/Ausschaltintervalle der Strom entsprechend zu- und abgeschaltet wird (Stromzeitsteuerung).

8. Vorrichtung zur Durchführung des Verfahrens nach einem der Ansprüche 2 oder 3, gekennzeichnet durch Rollen (11), die drehbar gelagert sind, auf die der Kleber (5, 6) mit integriertem Heizdraht (7) aufgewickelt ist, sowie Stromzuführungen (13) und (14) zu den Rollen (11), die einen elektrischen Kontakt zu dem Heizdraht (7) des Klebers herzustellen gestattet.

9. Vorrichtung nach Anspruch 8, dadurch gekennzeichnet, daß sie Führungsrollen (15) für den Kleber (5, 6), Gleitrollen (16), die in den Rillen (3, 4) zur Aufnahme des Klebers (5, 6) gleiten, sowie eine Führungsrolle (17) zum Entlangführen der Vorrichtung an der Blechkante aufweist.

10. Vorrichtung nach Anspruch 8 oder 9, gekennzeichnet durch einen Schalter (18) mit den Schaltstellungen "Aus", "Vorwärmung" und "Solltemperatur".

11. Verwendung eines mit einem Heizdraht (7) versehenen, ein duroplastisches Kunstharz ergebende, Harz/Härter-Gemisches auf der Basis eines Zweikomponenten-Polyurethan-Systems oder eines Zweikomponenten-Polyacrylat-Systems, das bei Raumtemperatur zu einer formbeständigen Schnur oder Folie formbar ist, dessen Oberfläche bei ca. 60°C bis 80°C klebrig wird und dessen Aushärtung als Polymerisation oder Polyaddition bei Temperaturen oberhalb 130°C unter Durchlaufen einer dünnflüssigen Phase innerhalb von 0,5 bis 1 Minute erfolgt, zum verkleben von Blechen.

**Claims**

1. Process for the bonding of metal sheets by means of a thermoset adhesive heated-up by an integrated metal conductor, characterized in that a resin/hardener mixture based on a two-component polyurethane system or a two-component polyacrylate system, which produces a thermoset synthetic resin, is used as adhesive, and in that the adhesive is heated by means of the integrated heating wire to such a temperature that an exothermic reaction is started which, together with the electrical heating, heats the adhesive to such an extent that it passes through a temporary low-viscosity phase before it sets.

2. Process according to Claim 1, characterized in that the adhesive (5, 6) with the integrated heating wire (7) has a circular cross-section, and in that, before bonding, at least one groove (3, 4) for receiving the adhesive (5, 6) is (are) pressed into one of the metal sheets (1) to be bonded, parallel to the edge.

3. Process according to Claim 2, characterized in that, before laying in the groove(s) (3, 4), the adhesive is heated to such a temperature that its surface becomes tacky, and in that the adhesive (5, 6) is fixed in the groove(s) (3, 4) by contact pressure.

4. Process according to Claim 1, characterized in that the adhesive is designed in the form of strips, and in that it is combined with a self-adhesive film and adhesive and self-adhesive film are fixed on the smooth metal sheet edge.

5. Process according to one of the preceding claims, characterized in that a commercially available battery charger with a current limiter circuit is used for heating the adhesive (5, 6) up to the set temperature by means of the integrated heating wire (7) and for keeping this temperature constant.

6. Process according to Claim 5, characterized in that, to keep the set temperature of the heating wire (7) constant by means of the current and voltage measuring device integrated in the battery charger, the electrical resistance of the wire (7) is measured and the resistance set value corresponding to the set temperature is calculated using the known length of the wire, which resistance set value is set on the battery charger and the current to the heating wire is connected and disconnected in such a way that the set resistance is maintained and thus the set temperature of the heating wire is kept constant (resistance control).

7. Process according to Claim 5, characterized in that the current is connected and disconnected accordingly by means of a constant current strength and the on/off switching intervals previously determined for various heating wire lengths and required for reaching and maintaining the set temperature (current time control).

8. Apparatus for implementation of the process according to one of Claims 2 or 3 characterized by rollers (11) which are rotationally mounted, onto which the adhesive (5, 6) with the integrated heating wire (7) is wound, and also current leads (13) (14) to the rollers (11), which allow an electrical contact to the heating wire (7) of the adhesive to be established.

9. Apparatus according to Claim 8, characterized in that it has guide rollers (15) for the adhesive (5, 6), sliding rollers (16) which slide in the grooves (3, 4) for receiving the adhesive (5, 6), and also a guide roller (17) for moving the apparatus along the edge of the metal sheet.

10. Apparatus according to Claim 8 or 9, characterized by a switch (18) with the switching positions "off", "preheating" and "set temperature".

11. Use of a resin/hardener mixture provided with a heating wire (7) and producing a thermoset synthetic resin, based on a two-component polyurethane system or a two-component polyacrylate system, which at room temperature can be worked into a dimensionally stable cord or film, the surface of which is tacky at approximately 60° C or 80° C and the setting of which takes place as polymerisation or polyaddition at temperatures above 130° C, including passing through a low-viscosity phase, within 0.5 to 1 minute, for the bonding of metal sheets.

## Revendications

1. Procédé pour le collage des t*oles au moyen d'une colle thermoplastique, chauffée par un conducteur métallique intégré, caractérisé en ce qu'est mis en oeuvre, comme colle, un mélange résine/durcisseur, sur la base d'un système polyuréthane à deux composants ou bien d'un système polyacrylate à deux composants, qui produit une résine synthétique thermoplastique, et en ce que la colle est chauffée au moyen du filament chauffant intégré, à une température telle qu'est déclenchée une réaction exothermique qui, combinée avec le chauffage électrique, chauffe si fortement la colle, qu'elle traverse une phase fluide transitoire, avant de durcir.

2. Procédé selon la revendication 1, caractérisé en ce que la colle (5, 6) avec le filament chauffant intégré (7) possède une section circulaire et en ce qu'au moins une rainure (3, 4) est (sont) imprimée(s) dans l'une des t*oles à coller (1), parallèlement à l'arête, avant le collage, pour recevoir la colle (5, 6).

3. Procédé selon la revendication 2, caractérisé en ce qu'avant la pose dans la (les) rainure(s) (3, 4), la colle (5, 6) est préchauffée à une telle température, que sa surface devient collante et que la colle (5, 6) est fixée par application de pression dans la (les) rainure(s) (3, 4).

4. Procédé selon la revendication 1, caractérisé en ce que la colle se trouve sous forme de bande et en ce qu'elle se trouve combinée, avec une feuille auto-adhésive et que la colle et la feuille auto-adhésive sont fixées sur l'arête lisse de la t*ole.

5. Procédé selon l'une des revendications précédentes, caractérisé en ce que l'on utilise un appareil chargeur de batterie courant du commerce, avec un contacteur de limitation d'intensité, pour le chauffage de la colle (5, 6) à la température de consigne, au moyen du filament chauffant intégré (7) et pour le maintien à une température constante.

6. Procédé selon la revendication 5, caractérisé en ce que la résistance électrique du filament (7) est mesurée, au moyen du dispositif de mesure d'intensité et de tension, intégré au chargeur de batterie, pour le maintien à une valeur constante de la température de consigne du filament chauffant (7) et que la valeur de consigne de la résistance correspondant à la température de consigne est calculée à l'aide de la longueur connue du filament, qu'elle est donnée en réglage au chargeur de batterie et que le courant allant au filament de chauffage est enclenché et déclenché de telle sorte que soit maintenue la résistance de consigne et que soit ainsi maintenue constante la température de consigne du filament chauffant (réglage en résistance).

7. Procédé selon la revendication 5, caractérisé en ce que pour atteindre et pour maintenir la température de consigne, à intensité constante, l'intensité va être enclenchée et déclenchée (commande par durée d'intensité), à des intervalles d'enclenchement et de déclenchement, déterminés au préalable pour différentes longueurs de filament chauffant.

8. Equipement pour l'exécution du procédé selon l'une des revendications 2 ou 3, caractérisé par des rouleaux (11) qui sont tournants, sur lesquels sont déroulés la colle (5, 6), avec le filament chauffant intégré (7), ainsi que sont formées des amenées de courant (13) et (14) aux rouleaux (11), qui créent un contact électrique avec le filament chauffant (7) de la colle.

9. Equipement selon la revendication 8, caractérisé en ce qu'il possède des rouleaux de guidage (15), pour la colle (5, 6), des rouleaux de glissement (16) qui glissent dans les rainures (3, 4) pour recevoir la colle (5, 6), ainsi qu'un rouleau de guidage (17) s'étendant le long de l'équipement de l'arête de la t*ole.

10. Equipement selon la revendication 8 ou 9, caractérisé par un commutateur (18) possédant les positions d'enclenchement "arrêt", "préchauffage" et "température de consigne".

11. Utilisation d'un mélange résine durcisseur produisant une résine synthétique thermoplastique, possédant un filament chauffant (7), sur la base d'un système polyuréthane à deux composants ou bien d'un système polyacrylate à deux composants, qui peut à température ambiante prendre une forme résistante de cordon ou de feuille, dont la surface est collante à une température d'environ 60°C à 80°C et dont le durcissement s'effectue par polymérisation ou bien par polyaddition, à des températures supérieures à 130°C, en traversant une phase fluide dans un intervalle de temps de 0,5 à 1 minute, pour le collage de t*oles.

Fig. 1

Fig. 2

0 141 065